# EUROPÄISCHE PATENTSCHRIFT

(11) **EP 3 423 706 B1**
(45) Veröffentlichungstag und Bekanntmachung des Hinweises auf die Patenterteilung: **16.10.2019**
(21) Anmeldenummer: 17706468.0
(22) Anmeldetag: 21.02.2017
(51) Int. Cl.: F03D 1/06

(54) **WINDKRAFTANLAGE MIT VERBESSERTER ROTORBLATTVERSCHRAUBUNG**
WIND TURBINE WITH IMPROVED ROTOR BLADE SCREW CONNECTION
ÉOLIENNE À VISSAGE AMÉLIORÉ DE PALE DE ROTOR

(30) Priorität: 29.02.2016 DE 102016203269
(43) Veröffentlichungstag der Anmeldung: 09.01.2019
(73) Patentinhaber: innogy SE, 45128 Essen (DE)
(72) Erfinder: FRANKE, Jan-Bernd, 52336 Elmshorn (DE)
(74) Vertreter: Richly & Ritschel Patentanwälte PartG mbB
(86) Internationale Anmeldenummer: PCT/EP2017/053932
(87) Internationale Veröffentlichungsnummer: WO 2017/148747

(56) Entgegenhaltungen:
- EP-A2- 2 045 464
- WO-A1-2007/003866
- US-A1- 2014 377 069

## Beschreibung

Die vorliegende Erfindung betrifft eine Windkraftanlage mit einer Rotornabe und zumindest einem Rotorblatt, das mittels eines zwischen der Rotornabe und dem Rotorblatt angeordneten Blattlager an der Rotornabe befestigt ist.

Aus dem Stand der Technik gemäß der WO 2006/131301 ist es bekannt, ein Rotorblatt an einer Rotornabe mittels einer Vielzahl von Verbindungsbolzen und Befestigungsmuttern zu befestigen. Zwischen dem Rotorblatt und der Rotornabe ist ein Blattlager mit einem Außenring und einem zu diesem konzentrisch verdrehbaren Innenring angeordnet. Das Rotorblatt ist mittels einer Vielzahl von Befestigungsbolzen mit dem Innenring verbunden, wobei endseitige Gewindeabschnitte der Befestigungsbolzen in Gewindebohrungen des Rotorblatts eingeschraubt sind, und wobei Befestigungsmuttern auf aus dem Innenring herausragende Gewindeabschnitte der Befestigungsbolzen aufgeschraubt werden. Der Außenring ist mittels einer Vielzahl von Befestigungsbolzen mit der Rotornabe verbunden, wobei endseitige Gewindeabschnitte der Befestigungsbolzen in Gewindebohrungen der Rotornabe eingeschraubt sind, und wobei Befestigungsmuttern auf aus dem Außenring herausragende Gewindeabschnitte der Befestigungsbolzen aufgeschraubt werden. Das Rotorblatt ist daher bezüglich der Rotornabe um die Längsachse des Rotorblatts drehbar gelagert.

Aus dem Stand der Technik sind ferner Windenergieanlagen bekannt, bei denen die Außenringe der Blattlager jeweils mit den Rotorblättern und die Innenringe der Blattlager jeweils mit den Rotornaben der Windenergieanlage verbunden sind.

Die Verbindungsbolzen zum Verbinden der Rotorblätter mit dem Blattlager sind üblicherweise als Dehnungsbolzen ausgebildet.

Zwischen endseitigen Gewindeabschnitten der Dehnungsbolzen ist dabei jeweils ein Dehnungsbereich mit einem verminderten Außendurchmesser angeordnet.

Für eine zuverlässige Befestigung des Rotorflügels an der Rotornabe müssen die jeweiligen Befestigungsmuttern mit vorbestimmten Drehmomenten angezogen bzw. mit Vorspannkräften montiert werden, sodass eine Selbsthemmung zwischen den Gewindeabschnitten und den Befestigungsmuttern einsetzt, wodurch ein Losdrehen der Befestigungsmuttern von den jeweiligen Gewindeabschnitten verhindert wird.

Trotz Selbsthemmung der Befestigungsmuttern können sich diese im Laufe der Zeit von den Gewindeabschnitten lösen, sodass eine zuverlässige Verbindung des Rotorblattes an der Rotornabe nicht mehr gewährleistet ist. Beispielsweise kann es durch die Materialauswahl für die Rotorflügel notwendig sein, die Befestigungsmuttern mit einem verminderten Drehmoment anzuziehen, damit das Material des Rotorflügels nicht beschädigt wird. Wenn beispielsweise kohlefaserverstärkte Verbundstoffe für den Rotorflügel verwendet werden, können die Befestigungsmuttern nur mit einem verminderten Drehmoment angezogen werden.

Bei hochbelasteten Schraubverbindungen kann es zur Selbstlösung von Schrauben und Muttern kommen, in deren Folge die gesamte Schraubverbindung versagen kann, wodurch entsprechend große materielle Schäden verursacht werden. Üblicherweise startet ein entsprechender Selbstlösungsvorgang mit dem Lösen einzelner Schrauben bzw. einzelner Befestigungsmuttern, die beim Herunterfallen erhebliche Sach- und schwerwiegende Personenschäden verursachen können.

Eine Ursache der Selbstlösung von Schrauben und Befestigungsmuttern kann eine zu elastische Konstruktion aus Rotornabe, Blattlager und Rotorblatt sein. Eine Abhilfemaßnahme könnte sein, eine steifere Gesamtkonstruktion zu bilden, die jedoch nur mit großen Entwicklungs-, Herstellungs-, Zertifizierungs- und Logistikaufwand im Feld implementiert werden kann und zu erheblichen Kosten beitragen würde.

Eine weitere Ursache einer Selbstlösung von Schrauben und Befestigungsmuttern kann ein Verrutschen der miteinander in Kontakt stehenden Flansche des Rotorblatts und des Blattlagers bzw. des Blattlagers und der Rotornabe aufeinander sein. So ist es bekannt, dass es bei einer größeren Anzahl von errichteten Windkraftanlagen Verschraubungen von Rotorblättern nicht richtig ausgeführt wurden. Die miteinander in Kontakt stehenden Flanschflächen wurden nicht gereinigt, sodass sich in der Trendfuge zwischen den Flanschflächen ein zu geringer Reibungskoeffizient ergibt. Aufgrund der geringen Reibung muss davon ausgegangen werden, dass bei extremen Lasten oder höheren Betriebslasten die miteinander in Kontakt stehenden Flansche verrutschen. Dies hätte zur Folge, dass es zu unzulässigen Scherbelastungen der Verschraubungselemente kommt. Zusätzlich ist dann davon auszugehen, dass das Blattlager einer verrückten Verbindung verspannt ist und sich möglicherweise nicht mehr drehen lässt.

Dies hätte zur Folge, dass die Windenergieanlage stillgelegt und das betroffene Rotorblatt abgenommen werden muss, die miteinander in Kontakt stehenden Flanschflächen gereinigt werden müssen und anschließend das Rotorblatt wieder montiert werden muss. Eine entsprechende Vorgehensweise würde zu erheblichen Kosten und darüber hinaus zu einem erheblichen Ertragsausfall der Windenergieanlage führen.

Die US 2014/0377069 A1 beschreibt eine Windkraftanlage mit einer Rotornarbe und mehreren Rotorblättern, die über eine Kugellagereinrichtung mit der Rotornarbe verbunden sind. Die Kugellagereinrichtung weist dabei einen Innenring und einen Außenring auf, wobei ein jedes Rotorblatt mittels Befestigungsschrauben mit dem Innenring verbunden sind, und wobei der Außenring über Befestigungsschrauben mit der Rotornarbe verbunden ist. Eine Versteifungseinrichtung, die mehrere Ringsegmente aufweisen kann, weist jeweils Befestigungsöffnungen auf, durch die die Befestigungsbolzen hindurchgeführt sind, sodass der Innenring zwischen dem Rotorblatt und der Versteifungseinrichtung angeordnet ist.

Die WO 2007/003866 A1 zeigt ebenfalls eine Windkraftanlage mit einer Rotornarbe und mehreren Rotorblättern die über eine einen Innenring und einen Außenring aufweisende Kugellagereinrichtung mit der Rotornarbe verbunden sind. Ferner weist die Windkraftanlage eine Außenplatte und eine Innenplatte auf, wobei die Außenplatte mit dem Außenring derart verbunden ist, dass der Außenring zwischen der Rotornarbe und der Außenplatte angeordnet ist, und wobei die Innenplatte mit dem Innenring derart verbunden ist, dass der Innenring zwischen der Innenplatte und dem Rotorblatt angeordnet ist. Sowohl die Außenplatte als auch die Innenplatte weisen eine Vielzahl von Durchgangsbohrungen auf, durch die Befestigungsschrauben hindurchragen.

Die EP 2045464 A2 beschreibt ebenfalls eine Windkraftanlage mit einer Rotornarbe, einem Blattlager, das einen Außenring und einen Innenring aufweist, und mehreren Rotorblättern, die über die Blattlager mit der Rotornarbe verbunden sind.

Der vorliegenden Erfindung liegt die Aufgabe zugrunde, eine Windkraftanlage mit einer verbesserten Rotorblattverschraubung bereitzustellen.

Die der vorliegenden Erfindung zugrundeliegende Aufgabe wird durch eine Windkraftanlage mit den Merkmalen des Anspruchs 1 gelöst. Vorteilhafte Ausgestaltungen der Windkraftanlage sind in den abhängigen Ansprüchen beschrieben.

Im Genaueren wird die der vorliegenden Erfindung zugrundeliegende Aufgabe durch eine Windkraftanlage mit einer Rotornabe, zumindest einem Blattlager und zumindest einem Rotorblatt gelöst, wobei das Blattlager einen ersten Ring und einen zweiten Ring aufweist, die konzentrisch zueinander verdrehbar sind. Der erste Ring ist mittels zumindest einem jeweils eine erste Durchgangsbohrung des ersten Rings durchsetzenden ersten Verbindungsbolzen mit dem Rotorblatt verbunden. Der zweite Ring ist mittels zumindest einem jeweils eine zweite Durchgangsbohrung des zweiten Rings durchsetzenden zweiten Verbindungsbolzen mit der Rotornabe verbunden. Die erfindungsgemäße Windkraftanlage ist dadurch gekennzeichnet, dass diese zumindest eine Versteifungseinrichtung mit zumindest einer Durchgangsöffnung aufweist, durch die der erste Verbindungsbolzen und/oder der zweite Verbindungsbolzen hindurchragt / hindurchragen, wobei die Versteifungseinrichtung mittels zumindest einer Befestigungsmutter, die auf einen aus der Versteifungseinrichtung herausragenden Gewindeabschnitt des ersten Verbindungsbolzens und/oder des zweiten Verbindungsbolzens aufgeschraubt ist, in Richtung des Blattlagers kraftbeaufschlagt ist.

Durch die Bereitstellung der Versteifungseinrichtung, durch die der erste Verbindungsbolzen und/oder der zweite Verbindungsbolzen hindurchragen, wird den Querkräften und Biegemomenten, die bei der Belastung der Rotorblätter auf die Verbindungsbolzen wirkt, ein größeres Widerstandsmoment gegenübergestellt. Dadurch wird einem Verrutschen des Rotorblatts bezüglich des ersten Rings und/oder einem Verrutschen des zweiten Rings bezüglich der Rotornabe entgegengewirkt. Ferner ist es möglich, bereits bestehende und sich im Betrieb befindliche Windkraftanlagen mit der Versteifungseinrichtung nachzurüsten, sodass die Ertüchtigung einer Windkraftanlage mit erheblich geringeren Kosten und kürzeren Ausfallzeiten ermöglicht ist.

Das Blattlager kann auch als Lagereinheit bezeichnet werden. Der erste Ring und der zweite Ring sind folglich konzentrisch zueinander angeordnet und zueinander verdrehbar. Da der erste Ring bezüglich des zweiten Rings verdrehbar ist, ist das Rotorblatt um dessen Längsachse bezüglich der Rotornabe drehbar.

Sowohl der erste Verbindungsbolzen als auch der zweite Verbindungsbolzen können jeweils als Stehbolzen und/oder als Dehnungsbolzen ausgebildet sein.

Der erste Verbindungsbolzen weist endseitig jeweils einen Gewindeabschnitt auf. Ein zweiter endseitiger Gewindeabschnitt des ersten Verbindungsbolzens kann in eine Gewindebohrung des Rotorblatts eingeschraubt sein. Ein erster endseitiger Gewindeabschnitt des ersten Verbindungsbolzens kann aus dem ersten Ring hervorragen und eine Befestigungsmutter kann auf den ersten Gewindeabschnitt aufgeschraubt sein. Folglich ist zumindest ein die jeweils ersten Durchgangsbohrungen des ersten Ringes durchsetzender erster Verbindungsbolzen mittels eines zweiten endseitigen Gewindeabschnitts mit dem Rotorblatt verbunden und eine erste Befestigungsmutter ist auf einen ersten endseitigen Gewindeabschnitt aufgeschraubt.

Der zweite Verbindungsbolzen weist endseitig jeweils einen Gewindeabschnitt auf. Ein zweiter endseitiger Gewindeabschnitt des zweiten Verbindungsbolzens kann in eine Gewindebohrung der Rotornabe eingeschraubt sein. Ein erster endseitiger Gewindeabschnitt des zweiten Verbindungsbolzens kann aus dem zweiten Ring hervorragen und eine Befestigungsmutter kann auf den ersten Gewindeabschnitt aufgeschraubt sein. Folglich ist zumindest ein die jeweils zweiten Durchgangsbohrungen des zweiten Ringes durchsetzender zweiter Verbindungsbolzen mittels eines zweiten endseitigen Gewindeabschnitts mit der Rotornabe verbunden und eine zweite Befestigungsmutter ist auf einen ersten endseitigen Gewindeabschnitt aufgeschraubt.

Selbstverständlich ist der erste Ring mittels einer Vielzahl von ersten Verbindungsbolzen, die jeweils durch erste Durchgangsbohrungen des ersten Rings hindurchgeführt sind, die winkelversetzt zueinander im ersten Ring angeordnet sind und sich vorzugsweise über den gesamten Umfang des ersten Rings erstrecken, mit dem Rotorblatt verbunden.

Selbstverständlich ist der zweite Ring mittels einer Vielzahl von zweiten Verbindungsbolzen, die jeweils durch zweite Durchgangsbohrungen des zweiten Rings hindurchgeführt sind, die winkelversetzt zueinander im zweiten Ring angeordnet sind und sich vorzugsweise über den gesamten Umfang des zweiten Rings erstrecken, mit der Rotornabe verbunden.

Die Anzahl der ersten Durchgangsbohrungen entspricht also der Anzahl der ersten Verbindungsbolzen.

Der zweite Verbindungsbolzen ist mit der Rotornabe mittels des ersten Gewindeabschnitts des Verbindungsbolzens vorzugsweise dadurch verbunden, dass der zweite Gewindeabschnitt in eine Gewindebohrung der Rotornabe eingeschraubt ist.

Vorzugsweise weist die Versteifungseinrichtung zumindest ein erstes Versteifungssegment auf, und der erste Ring des Blattlagers ist zwischen dem ersten Versteifungssegment und dem Rotorblatt angeordnet, wobei das erste Versteifungssegment mittels eine Befestigungsmutter in Richtung des ersten Rings kraftbeaufschlagt ist.

Durch eine entsprechende Ausbildung der Windkraftanlage wird einem Verrutschen des Rotorblatts bezüglich des ersten Rings besonders effektiv entgegengewirkt. Auch bei einer entsprechenden Ausbildung der Versteifungseinrichtung ist es möglich, bereits bestehende und sich im Betrieb befindliche Windkraftanlagen mit der Versteifungseinrichtung nachzurüsten, sodass die Ertüchtigung einer Windkraftanlage mit erheblich geringeren Kosten und kürzeren Ausfallzeiten ermöglicht ist.

Vorzugsweise ist das erste Versteifungssegment als erstes Teilringsegment ausgebildet, das einen Krümmungsradius aufweist, der einem Krümmungsradius des ersten Rings entspricht.

Eine entsprechende Ausbildung der Versteifungseinrichtung bietet den Vorteil, dass ein Nachrüsten einer Windkraftanlage mit der Versteifungseinrichtung vereinfacht möglich ist, da nicht sämtliche Befestigungsmuttern, mittels denen das Rotorblatt an dem ersten Ring des Blattlagers befestigt sind, zur gleichen Zeit gelöst werden müssen. Dadurch reduzieren sich die Kosten für die Ertüchtigung einer Windkraftanlage.

Weiter vorzugsweise weist das erste Versteifungssegment eine Vielzahl von Durchgangsöffnungen auf, die jeweils in Flucht mit ersten Durchgangsbohrungen des ersten Rings stehen und jeweils durch erste Verbindungsbolzen durchsetzt sind.

Durch ein entsprechend ausgebildetes Versteifungssegment mit einer Vielzahl von Durchgangsöffnungen wird das Widerstandsmoment nochmals erhöht, sodass sich die Konstruktion weniger stark elastisch verform und somit die Gefahr des Losdrehens reduziert wird

Weiter vorzugsweise ist das erste Versteifungssegment als erstes Ringsegment ausgebildet.

Auch bei einer entsprechenden Ausbildung der Versteifungseinrichtung erhöht sich das Widerstandsmoment nochmals und es kann ein Formschluss zwischen dem Lagerring und dem Rotorblatt entstehen, sodass einem Verrutschen des Rotorblatts bezüglich des ersten Rings des Blattlagers nochmals verbessert entgegengewirkt wird.

Vorzugsweise weist das erste Ringsegment eine der Anzahl der Durchgangsbohren im ersten Ring entsprechende Anzahl von Durchgangsöffnungen auf, die jeweils in Flucht mit ersten Durchgangsbohrungen des ersten Rings stehen und jeweils durch erste Verbindungsbolzen durchsetzt sind.

Die Kombination der aus Bildung des Versteifungssegments als Ringsegment mit dem Merkmal, dass das Ringsegment von sämtlichen ersten Befestigungsbolzen durchsetzt ist, erhöht das Widerstandsmoment nochmals, sodass die Windkraftanlage erhöhten Belastungen standhalten kann, ohne dass ein Verrutschen des Rotorblatts bezüglich des Innenlagers zu befürchten ist.

Vorzugsweise weist die Versteifungseinrichtung zumindest eine Klammer auf, die mit dem ersten Versteifungssegment und mit dem Rotorblatt verbunden ist, so dass auf das Rotorblatt ausgeübte Kräfte über die Klammer auf das erste Versteifungselement zumindest teilweise übertragbar sind.

Eine entsprechende Ausbildung der Windkraftanlage hat den Vorteil, dass ein zusätzlicher Lastpfad zwischen dem Rotorblatt und dem ersten Ring gebildet ist, sodass auf das Rotorblatt ausgeübte Kräfte nicht lediglich nur durch die ersten Verbindungsbolzen auf den Lagerring übertragen werden, sondern auch über die Klammer/die Klammern von dem Rotorblatt auf den ersten Ring des Blattlagers übertragen werden. Hierdurch wird die Stabilität der Windkraftanlage nochmals erhöht. Denn die jeweiligen ersten Verbindungsbolzen werden entlastet, sodass auch die Belastung der Befestigungsmuttern, mittels denen das Rotorblatt an dem Lagerring befestigt ist, reduziert wird.

Die Befestigung der jeweiligen Halteklammern an dem ersten Versteifungssegment kann beispielsweise durch eine Verschraubung erfolgen. Hierzu weist die erste Versteifungseinrichtung vorzugsweise eine Gewindebohrung und die jeweiligen Klammern jeweils eine Durchgangsöffnung auf, durch die jeweils Verbindungsbolzen hindurchgeführt sind, wobei die jeweiligen Klammern mittels Befestigungsmuttern an die ersten Versteifungssegmente befestigt sind. Die Verbindung zwischen den jeweiligen Klammern und dem Rotorblatt kann auch durch eine Verschraubung realisiert sein. Ferner ist es auch möglich, dass die Verbindung der jeweiligen Klammern mit dem Rotorblatt durch eine Verklebung erfolgt.

Vorzugsweise weist die Versteifungseinrichtung zumindest ein zweites Versteifungssegment auf, wobei der zweite Ring des Blattlagers zwischen dem zweiten Versteifungssegment und der Rotornabe angeordnet ist, und wobei das zweite Versteifungssegment mittels einer Befestigungsmutter in Richtung des zweiten Rings (120) kraftbeaufschlagt ist.

Durch eine entsprechende Ausbildung der Windkraftanlage wird einem Verrutschen des Blattlagers bezüglich der Rotornabe besonders effektiv entgegengewirkt. Auch bei einer entsprechenden Ausbildung der Versteifungseinrichtung ist es möglich, bereits bestehende und sich im Betrieb befindliche Windkraftanlagen mit der Versteifungseinrichtung nachzurüsten, sodass die Ertüchtigung einer Windkraftanlage mit erheblich geringeren Kosten und kürzeren Ausfallzeiten ermöglicht ist.

Vorzugsweise ist das zweite Versteifungssegment als zweites Teilringsegment ausgebildet ist, das einen Krümmungsradius aufweist, der einem Krümmungsradius des zweiten Rings entspricht.

Eine entsprechende Ausbildung der Versteifungseinrichtung bietet den Vorteil, dass ein Nachrüsten einer Windkraftanlage mit der Versteifungseinrichtung vereinfacht möglich ist, da nicht sämtliche Befestigungsmuttern, mittels denen das Blattlager an der Rotornabe befestigt sind, zur gleichen Zeit gelöst werden müssen. Dadurch reduzieren sich die Kosten für die Ertüchtigung einer Windkraftanlage.

Weiter vorzugsweise weist das zweite Versteifungssegment eine Vielzahl von Durchgangsöffnungen aufweist, die jeweils in Flucht mit zweiten Durchgangsbohrungen des zweiten Rings stehen und jeweils durch zweite Verbindungsbolzen durchsetzt sind.

Durch ein entsprechend ausgebildetes Versteifungssegment mit einer Vielzahl von Durchgangsöffnungen wird das Widerstandsmoment nochmals erhöht, sodass einem Verrutschen des Blattlagers bezüglich der Rotornabe nochmals verbessert entgegengewirkt wird. Folglich kann die Windkraftanlage erhöhten Belastungen ausgesetzt werden, ohne dass das Blattlager bezüglich der Rotornabe verrutscht.

Vorzugsweise ist das zweite Versteifungssegment als zweites Ringsegment ausgebildet.

Auch bei einer entsprechenden Ausbildung der Versteifungseinrichtung erhöht sich das Widerstandsmoment nochmals, sodass einem Verrutschen des Blattlagers bezüglich der Rotornabe nochmals verbessert entgegengewirkt wird.

Weiter vorzugsweise weist das zweite Ringsegment eine der Anzahl der zweiten Durchgangsbohren im zweiten Ring entsprechende Anzahl von Durchgangsöffnungen auf, die jeweils in Flucht mit zweiten Durchgangsbohrungen des zweiten Rings stehen und jeweils durch zweite Verbindungsbolzen durchsetzt sind.

Die Kombination der aus Bildung des Versteifungssegments als Ringsegment mit dem Merkmal, dass das Ringsegment von sämtlichen zweiten Befestigungsbolzen durchsetzt ist, erhöht das Widerstandsmoment nochmals, sodass die Windkraftanlage erhöhten Belastungen standhalten kann, ohne dass ein Verrutschen des Blattlagers bezüglich der Rotornabe zu befürchten ist.

Vorzugsweise sind der erste Ring als Innenring und der zweite Ring als Außenring des Blattlagers ausgebildet.

Weiter vorzugsweise sind der erste Ring als Außenring und der zweite Ring als Innenring des Blattlagers ausgebildet.

Der Außenring kann auch als Außenanschlussring oder als (erstes) Anschlusselement bezeichnet werden. Der Innenring kann auch als Innenanschlussring oder als (zweites) Anschlusselement bezeichnet werden.

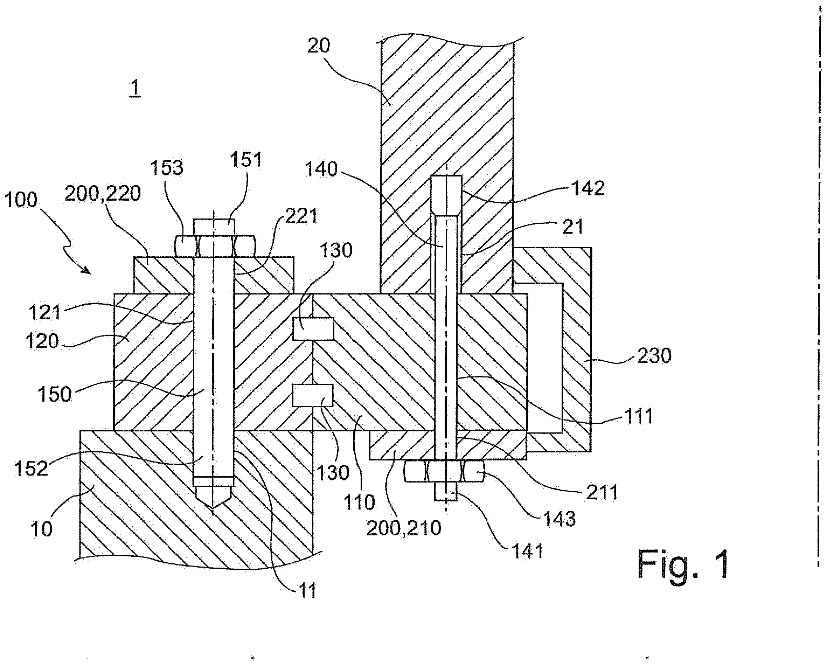

Weitere Vorteile, Einzelheiten und Merkmale der Erfindung ergeben sich nachfolgend aus den erläuterten Ausführungsbeispielen. Dabei zeigt
- Figur 1:: einen Schnitt durch eine Rotorblattlagereinheit einer erfindungsgemäßen Windkraftanlage.

Ein Rotorblatt 20 ist üblicherweise aus einem Faserverbundwerkstoff gebildet und nach Art eines Flügels gestaltet. Zur Gewichtsersparnis ist das Rotorblatt 20 als einen inneren Hohlraum umgebende Mantelfläche ausgebildet, die an einem rückwärtigen Ende des Rotorblatts 20 in einen zylindermantelförmigen Verlauf mit einem Durchmesser von üblicherweise 2 bis 3 m übergeht. Demzufolge hat eine Ebene rückwärtige Anschlussfläche des Rotorblatts 20 einen kreisförmigen Umriss. In dieser Anschlussfläche, die auch als Anschlussflansch bezeichnet wird, sind eine Vielzahl von kranzförmig angeordneten Gewindebohrungen 21 vorgesehen, mittels denen das Rotorblatt 20 an einem Blattlager 100 befestigt ist.

In einer Rotornabe 10 der Windkraftanlage 1 ist eine kreisförmige Anschlussfläche gebildet, die auch als Anschlussflansch bezeichnet wird, der eine kreisförmige Öffnung in der Rotornabe 10 umschließt. In dem Anschlussflansch der Rotornabe 10 ist eine Vielzahl von kranzförmig angeordneten Gewindebohrungen 11 vorgesehen.

Zwischen dem Anschlussflansch des Rotorblatts 20 und dem Anschlussflansch der Rotornabe 10 ist das Blattlager 100 angeordnet. Das Blattlager 100 weist zwei ringförmige, zueinander konzentrische und gegeneinander verdrehbaren Ringelemente 110, 120 auf. Ein erster Ring 110, der in dem dargestellten Ausführungsbeispiel als Innenring 110 ausgebildet ist, des Blattlagers 100 ist mittels einer Vielzahl von ersten Durchgangsbohrungen 111 des Innenrings durchsetzenden ersten Verbindungsbolzen 140 mit dem Rotorblatt 20 verbunden. Dabei sind jeweils zweite Gewindeabschnitte 142 der ersten Verbindungsbolzen 140 in die jeweiligen Gewindebohrungen 21 des Rotorblatts 20 eingeschraubt. Das Rotorblatt 20 ist mit dem Innenring 110 dadurch verbunden, dass aus dem Innenring 110 herausragende erste Gewindeabschnitte 141 der ersten Verbindungsbolzen 140 mittels Befestigungsmuttern 143 an dem Innenring 110 befestigt sind.

Ein zweiter Ring 110, der in dem dargestellten Ausführungsbeispiel als Außenring 120 ausgebildet ist, des Blattlagers 100 ist mittels einer Vielzahl jeweils zweite Durchgangsbohrungen 121 des Außenrings 120 durchsetzenden zweiten Verbindungsbolzen 150 mit der Rotornabe 10 verbunden. Dabei sind jeweils zweite Gewindeabschnitte 152 der zweiten Verbindungsbolzen 150 in jeweilige Gewindebohrungen 11 der Rotornabe 10 eingeschraubt. Der Außenring 120 ist mit der Rotornabe 10 dadurch verbunden, dass aus dem Außenring 120 herausragende Gewindeabschnitte 151 der zweiten Verbindungsbolzen 150 mittels Befestigungsmuttern 153 an dem Außenring 120 befestigt sind.

Der Innenring 110 ist bezüglich des Außenrings 120 verdrehbar, wobei zwischen dem Innenring 110 und dem Außenring 120 einem Wälzkörpersatz 130 angeordnet ist. Da eine Längsachse des Rotorblatts 20 mit den Längsachsen des Innenrings 110 und des Außenrings 120 zusammenfällt, ist das Rotorblatt 20 bezüglich der Rotornabe 10 um die Längsachse des Rotorblattes 20 verdrehbar.

Aus Figur 1 ist ersichtlich, dass die Windkraftanlage 1 eine Versteifungseinrichtung aufweist, die in dem dargestellten Ausführungsbeispiel ein erstes Versteifungssegment 210 und ein zweites Versteifungssegment 220 umfasst.

Das erste Versteifungssegment 210 weist dabei Durchgangsöffnungen 211 auf, die fluchtend mit den ersten Durchgangsbohrungen 111 des Innenrings 110 ausgerichtet sind. Die jeweiligen ersten Gewindeabschnitte 141 der ersten Verbindungsbolzen 140 ragen aus dem ersten Versteifungssegment 210 heraus, und das erste Versteifungssegment 210 ist mittels Befestigungsmuttern 143 in Richtung des Innenrings 110 kraftbeaufschlagt. Folglich ist der Innenring 110 des Blattlagers 100 zwischen dem ersten Versteifungssegment 210 und dem Rotorblatt 20, im Genaueren dem Anschlussflansch des Rotorblatts 20 angeordnet.

Aus Figur 1 ist ferner ersichtlich, dass die Versteifungseinrichtung 200 zumindest eine Klammer 230, vorzugsweise aber eine Vielzahl von Klammern 230 aufweist, die sowohl mit dem ersten Versteifungssegment 210 als auch mit dem Rotorblatt 20 verbunden ist. Die Verbindung der Klammer 230 mit dem ersten Versteifungselement 210 erfolgt mittels eines Verbindungsbolzens, der durch eine Durchgangsbohrung in der Klammer 230 hindurchragt und in eine dafür vorgesehene Gewindebohrung in dem ersten Versteifungssegment eingeschraubt ist. Die Verbindung zwischen der Klammer 230 und dem ersten Versteifungssegment 210 erfolgt mittels einer Befestigungsmutter. Ferner ist ersichtlich, dass die Klammer 230 mit dem Rotorblatt 20 in direktem Kontakt steht. Die Verbindung der Klammer 230 mit dem Rotorblatt 20 kann auch über eine Verschraubung erfolgen. In dem dargestellten Ausführungsbeispiel ist die Verbindung zwischen der Klammer 230 und dem Rotorblatt 20 aber durch eine Verklebung realisiert.

Durch Verbinden des Rotorblatts 20 mit dem ersten Versteifungssegment 210 mittels der Klammer 230 ist ein zweiter Lastpfad gebildet, sodass auf das Rotorblatt 20 ausgeübte Kräfte nicht lediglich nur über den ersten Verbindungsbolzen 140 auf den Innenring 110 übertragen werden, sondern auch über die Klammer 230. Ferner kann, falls der Reibschluss in der Schraubverbindung beispielsweise durch verschmutzte Flanschflächen beeinträchtigt ist, der zusätzlich vorhandene Formschluss der Klammer 230 die Lastübertragung sicherstellen.

Das zweite Versteifungssegment 220 weist Durchgangsöffnungen 221 auf, die fluchtend mit den zweiten Durchgangsbohrungen 121 des Außenrings 120 ausgerichtet sind. Die jeweiligen ersten Gewindeabschnitte 151 der zweiten Verbindungsbolzen 150 ragen aus dem zweiten Versteifungssegment 220 heraus, und das zweite Versteifungssegment 220 ist mittels Befestigungsmuttern 153 in Richtung des Außenrings 120 kraftbeaufschlagt. Folglich ist der Außenring 120 des Blattlagers 100 zwischen dem zweiten Versteifungssegment 220 und der Rotornabe 10, im Genaueren dem Anschlussflansch der Rotornabe 10 angeordnet.

Es ist zu berücksichtigen, dass die Versteifungseinrichtung lediglich aus dem ersten Versteifungselement 210 gebildet sein kann. Ferner ist es möglich, dass die Versteifungseinrichtung aus dem ersten Versteifungssegment 210 und der Klammer 230 gebildet ist. Weiterhin ist es auch möglich, dass die Versteifungseinrichtung lediglich aus dem zweiten Versteifungssegment 220 gebildet ist. Eine optimale Wirkung der Versteifungseinrichtung wird jedoch erzielt, wenn diese sowohl das erste Versteifungssegment 210, das zweite Versteifungssegment 220 und eine Vielzahl von Klammern 230 aufweist, die jeweils mit dem ersten Versteifungssegment 210 verbunden sind.

### Bezugszeichenliste

- 1: Windkraftanlage
- 10: Rotornabe
- 11: Gewindebohrung (der Rotornabe)
- 20: Rotorblatt
- 21: Gewindebohrung (des Rotorblatts)
- 100: Blattlager
- 110: erster Ring / Innenring (des Blattlagers)
- 111: erste Durchgangsbohrung (des ersten Rings)
- 120: zweiter Ring / Außenring (des Blattlagers)
- 121: zweite Durchgangsbohrung (des zweiten Rings)
- 130: Wälzkörpersatz / Wälzlager / Kugellager (des Blattlagers)
- 140: erster Verbindungsbolzen
- 141: (erster) Gewindeabschnitt (des ersten Verbindungsbolzens)
- 142: (zweiter) Gewindeabschnitt (des ersten Verbindungsbolzens)
- 143: Befestigungsmutter
- 150: zweiter Verbindungsbolzen
- 151: (erster) Gewindeabschnitt (des zweiten Verbindungsbolzens)
- 152: (zweiter) Gewindeabschnitt (des zweiten Verbindungsbolzens)
- 153: Befestigungsmutter
- 210: erstes Versteifungssegment / Teilringsegment / Ringsegment (der Versteifungseinrichtung)
- 211: Durchgangsöffnung (des ersten Versteifungssegments)
- 220: zweites Versteifungssegment / Teilringsegment / Ringsegment (der Versteifungseinrichtung)
- 221: Durchgangsöffnung (des zweiten Versteifungssegments)
- 230: Klammer (der Versteifungseinrichtung)

## Patentansprüche

1. Windkraftanlage (1) mit einer Rotornabe (10), zumindest einem Blattlager (100) und zumindest einem Rotorblatt (20), wobei die Windkraftanlage (1) folgende Merkmale aufweist:
- das Blattlager (100) weist einen ersten Ring (110) und einen zweiten Ring (120) auf, die konzentrisch zueinander verdrehbar sind;
- der erste Ring (110) ist mittels zumindest einem jeweils eine erste Durchgangsbohrung (111) des ersten Rings (110) durchsetzenden ersten Verbindungsbolzen (140) mit dem Rotorblatt (20) verbunden;
- der zweite Ring (120) ist mittels zumindest einem jeweils eine zweite Durchgangsbohrung (121) des zweiten Rings (120) durchsetzenden zweiten Verbindungsbolzen (150) mit der Rotornabe (10) verbunden;
- die Windkraftanlage (1) weist zumindest eine Versteifungseinrichtung (210, 220) mit zumindest einer Durchgangsöffnung (211, 221) auf, durch die der erste Verbindungsbolzen (140) und/oder der zweite Verbindungsbolzen (150) hindurchragt / hindurchragen;
- die Versteifungseinrichtung (210, 220) ist mittels zumindest einer Befestigungsmutter (143, 153), die auf einen aus der Versteifungseinrichtung (210, 220) herausragenden Gewindeabschnitt (141, 151) des ersten Verbindungsbolzens (140) und/oder des zweiten Verbindungsbolzens (150) aufgeschraubt ist, in Richtung des Blattlagers (100) kraftbeaufschlagt;
- die Versteifungseinrichtung (210, 220) weist zumindest ein erstes Versteifungssegment (210) auf;
- der erste Ring (110) des Blattlagers (100) ist zwischen dem ersten Versteifungssegment (210) und dem Rotorblatt (20) angeordnet; und
- das erste Versteifungssegment (210) ist mittels eine Befestigungsmutter (143) in Richtung des ersten Rings (110) kraftbeaufschlagt,
wobei die Windkraftanlage (1) **dadurch gekennzeichnet ist, dass** die Versteifungseinrichtung (210, 220) zumindest eine Klammer (230) aufweist, die mit dem ersten Versteifungssegment (210) und mit dem Rotorblatt (20) verbunden ist, so dass auf das Rotorblatt (20) ausgeübte Kräfte über die Klammer (230) auf das erste Versteifungselement (210) zumindest teilweise übertragbar sind.

2. Windkraftanlage nach Anspruch 1, **dadurch gekennzeichnet, dass** das erste Versteifungssegment (210) als erstes Teilringsegment (210) ausgebildet ist, das einen Krümmungsradius aufweist, der einem Krümmungsradius des ersten Rings (110) entspricht.

3. Windkraftanlage (1) nach einem der vorhergehenden Ansprüche, **dadurch gekennzeichnet, dass** das erste Versteifungssegment (210) eine Vielzahl von Durchgangsöffnungen (211) aufweist, die jeweils in Flucht mit ersten Durchgangsbohrungen (111) des ersten Rings (110) stehen und jeweils durch erste Verbindungsbolzen (140) durchsetzt sind.

4. Windkraftanlage (1) nach einem der vorhergehenden Ansprüche, **dadurch gekennzeichnet, dass** das erste Versteifungssegment (210) als erstes Ringsegment (210) ausgebildet ist.

5. Windkraftanlage (1) nach Anspruch 4, **dadurch gekennzeichnet, dass** das erste Ringsegment (210) eine der Anzahl der Durchgangsbohren (111) im ersten Ring (110) entsprechende Anzahl von Durchgangsöffnungen (211) aufweist, die jeweils in Flucht mit ersten Durchgangsbohrungen (111) des ersten Rings (110) stehen und jeweils durch erste Verbindungsbolzen (140) durchsetzt sind.

6. Windkraftanlage (1) nach einem der vorhergehenden Ansprüche, **dadurch gekennzeichnet, dass**
- die Versteifungseinrichtung (210, 220) zumindest ein zweites Versteifungssegment (220) aufweist;
- der zweite Ring (120) des Blattlagers (100) zwischen dem zweiten Versteifungssegment (220) und der Rotornabe (10) angeordnet ist; und
- das zweite Versteifungssegment (220) mittels einer Befestigungsmutter (153) in Richtung des zweiten Rings (120) kraftbeaufschlagt ist.

7. Windkraftanlage nach Anspruch 6, **dadurch gekennzeichnet, dass** das zweite Versteifungssegment (220) als zweites Teilringsegment (220) ausgebildet ist, das einen Krümmungsradius aufweist, der einem Krümmungsradius des zweiten Rings (120) entspricht.

8. Windkraftanlage (1) nach einem der Ansprüche 6 bis 7, **dadurch gekennzeichnet, dass** das zweite Versteifungssegment (220) eine Vielzahl von Durchgangsöffnungen (221) aufweist, die jeweils in Flucht mit zweiten Durchgangsbohrungen (121) des zweiten Rings (120) stehen und jeweils durch zweite Verbindungsbolzen (150) durchsetzt sind.

9. Windkraftanlage (1) nach einem der Ansprüche 6 bis 8, **dadurch gekennzeichnet, dass** das zweite Versteifungssegment (220) als zweites Ringsegment (220) ausgebildet ist.

10. Windkraftanlage (1) nach Anspruch 9, **dadurch gekennzeichnet, dass** das zweite Ringsegment (220) eine der Anzahl der zweiten Durchgangsbohren (121) im zweiten Ring (120) entsprechende Anzahl von Durchgangsöffnungen (221) aufweist, die jeweils in Flucht mit zweiten Durchgangsbohrungen (121) des zweiten Rings (120) stehen und jeweils durch zweite Verbindungsbolzen (150) durchsetzt sind.

11. Windkraftanlage (1) nach einem der vorhergehenden Ansprüche, **dadurch gekennzeichnet, dass** der erste Ring (110) als Innenring (110) und der zweite Ring (120) als Außenring (120) des Blattlagers (100) ausgebildet sind.

12. Windkraftanlage (1) nach einem der Ansprüche 1 bis 10, **dadurch gekennzeichnet, dass** der erste Ring (110) als Außenring (110) und der zweite Ring (120) als Innenring (120) des Blattlagers (100) ausgebildet sind.

## Claims

1. Wind power plant (1) having a rotor hub (10), at least one blade bearing (100) and at least one rotor blade (20), the wind power plant (1) exhibiting the following features:
- the blade bearing (100) exhibits a first ring (110) and a second ring (120) concentrically rotatable with respect to each other;
- the first ring (110) is connected to the rotor blade (20) by means of at least one first connecting bolt (140) which penetrates a first through hole (111) of the first ring (110);
- the second ring (120) is connected to the rotor hub (10) by means of at least one second connecting bolt (150) which penetrates a second through hole (121) of the second ring (120);
- the wind power plant (1) exhibits at least one stiffening device (210, 220) with at least one through-opening (211, 221), through which the first connecting bolt (140) and/or the second connecting bolt (150) projects/project;
- the stiffening device (210, 220) is subjected to force in direction of the blade bearing (100) by means of at least one mounting nut (143, 153), which is mounted on a thread section (141, 151) of the first connecting bolt (140) and/or of the second connecting bolt (150) projecting out of the stiffening device (210, 220)
- the stiffening device (210, 220) exhibits at least one first stiffening segment (210);
- the first ring (110) of said blade bearing (100) is placed between said first stiffening segment (210) and said rotor blade (20); and
- the first stiffening segment (210) is subjected to force in the direction of the first ring (110) by means of a mounting nut (143),
wherein the wind power plant (1) is **characterized in that** the stiffening device (210, 220) exhibits at least one clamp (230) which is connected to the first stiffening segment (210) and to the rotor blade (20), so that forces exerted on the rotor blade (20) can be transmitted at least partially via the clamp (230) to the first stiffening element (210).

2. Wind power plant according to claim 1, **characterized in that** the first stiffening segment (210) is formed as a first partial ring segment (210) having a radius of curvature corresponding to a radius of curvature of the first ring (110).

3. Wind power plant (1) according to one of the preceding claims, **characterized in that** the first stiffening segment (210) comprises a plurality of through openings (211) each in alignment with first through holes (111) of the first ring (110) and each penetrated by first connecting bolts (140).

4. Wind power plant (1) according to one of the preceding claims, **characterized in that** the first stiffening segment (210) is designed as a first annular segment (210).

5. Wind power plant (1) according to claim 4, **characterized in that** the first ring segment (210) has a number of through openings (211) corresponding to the number of through holes (111) in the first ring (110), each of which is in alignment with first through holes (111) of the first ring (110) and each of which is penetrated by first connecting bolts (140).

6. Wind power plant (1) according to one of the preceding claims, **characterized in that**
- the stiffening device (210, 220) comprises at least one second stiffening segment (220);
- the second ring (120) of the blade bearing (100) is located between the second stiffening segment (220) and the rotor hub (10); and
- the second stiffening segment (220) is subjected to force in the direction of the second ring (120) by means of a mounting nut (153).

7. Wind power plant according to claim 6, **characterized in that** the second stiffening segment (220) is formed as a second partial ring segment (220) which exhibits a radius of curvature which corresponds to a radius of curvature of the second ring (120).

8. Wind power plant (1) according to one of claims 6 to 7, **characterized in that** the second stiffening segment (220) exhibits a plurality of through openings (221) which are in alignment with second through holes (121) of the second ring (120) and penetrated by second connecting bolts (150).

9. Wind power plant (1) according to one of claims 6 to 8, **characterized in that** the second stiffening segment (220) is designed as a second ring segment (220).

10. Wind power plant (1) according to claim 9, **characterized in that** the second ring segment (220) exhibits a number of through openings (221) corresponding to the number of second through holes (121) in the second annular segment (120), each of which is in alignment with second through holes (121) of the second ring segment (120) and each of which is penetrated by second connecting bolts (150).

11. Wind power plant (1) according to one of the preceding claims, **characterized in that** the first ring (110) is constructed as an inner ring (110) and the second ring (120) is constructed as an outer ring (120) of the blade bearing (100).

12. Wind power plant (1) according to one of claims 1 to 10, **characterized in that** the first ring (110) is constructed as an outer ring (110) and the second ring (120) is constructed as an inner ring (120) of the blade bearing (100).

## Revendications

1. Éolienne (1) comprenant un moyeu de rotor (10), au moins un palier de pale (100) et au moins une pale de rotor (20), l'éolienne (1) présentant les caractéristiques suivantes :
- le palier de pale (100) présente une première bague (110) et une deuxième bague (120) qui peuvent tourner concentriquement l'une par rapport à l'autre ;
- la première bague (110) est connectée à la pale de rotor (20) au moyen d'au moins un premier boulon de connexion (140) traversant à chaque fois un premier alésage traversant (111) de la première bague (110) ;
- la deuxième bague (120) est connectée au moyeu de rotor (10) au moyen d'au moins un deuxième boulon de connexion (150) traversant à chaque fois un deuxième alésage traversant (121) de la deuxième bague (120) ;
- l'éolienne (1) présente au moins un dispositif de rigidification (210, 220) avec au moins une ouverture traversante (211, 221) à travers laquelle pénètre(nt) le premier boulon de connexion (140) et/ou le deuxième boulon de connexion (150);
- le dispositif de rigidification (210, 220) est sollicité par force dans la direction du palier de pale (100) au moyen d'au moins un écrou de fixation (143, 153) qui est vissé sur une portion filetée (141, 151) du premier boulon de connexion (140) et/ou du deuxième boulon de connexion (150), qui fait saillie hors du dispositif de rigidification (210, 220) ;
- le dispositif de rigidification (210, 220) présente au moins un premier segment de rigidification (210) ;
- la première bague (110) du palier de pale (100) est disposée entre le premier segment de rigidification (210) et la pale de rotor (20) ; et
- le premier segment de rigidification (210) est sollicité par force dans la direction de la première bague (110) au moyen d'un écrou de fixation (143),
l'éolienne (1) étant **caractérisée en ce que** le dispositif de rigidification (210, 220) présente au moins une pince (230) qui est connectée au premier segment de rigidification (210) et à la pale de rotor (20) de telle sorte que les forces exercées sur la pale de rotor (20) puissent être transmises au moins en partie par le biais de la pince (230) au premier élément de rigidification (210) .

2. Éolienne selon la revendication 1, **caractérisée en ce que** le premier segment de rigidification (210) est réalisé sous forme de premier segment de bague partiel (210) qui présente un rayon de courbure qui correspond à un rayon de courbure de la première bague (110).

3. Éolienne (1) selon l'une quelconque des revendications précédentes, **caractérisée en ce que** le premier segment de rigidification (210) présente une pluralité d'ouvertures traversantes (211) qui sont à chaque fois en affleurement avec des premiers alésages traversants (111) de la première bague (110) et qui sont à chaque fois traversées par des premiers boulons de connexion (140) .

4. Éolienne (1) selon l'une quelconque des revendications précédentes, **caractérisée en ce que** le premier segment de rigidification (210) est réalisé sous forme de premier segment de bague (210) .

5. Éolienne (1) selon la revendication 4, **caractérisée en ce que** le premier segment de bague (210) présente un nombre d'ouvertures traversantes (211) correspondant au nombre des alésages traversants (111) dans la première bague (110), lesquelles ouvertures traversantes sont à chaque fois en affleurement avec des premiers alésages traversants (111) de la première bague (110) et sont à chaque fois traversées par des premiers boulons de connexion (140).

6. Éolienne (1) selon l'une quelconque des revendications précédentes, **caractérisée en ce que**
- le dispositif de rigidification (210, 220) présente au moins un deuxième segment de rigidification (220) ;
- la deuxième bague (120) du palier de pale (100) est disposée entre le deuxième segment de rigidification (220) et le moyeu de rotor (10) ; et
- le deuxième segment de rigidification (220) est sollicité par force au moyen d'un écrou de fixation (153) dans la direction de la deuxième bague (120).

7. Éolienne selon la revendication 6, **caractérisée en ce que** le deuxième segment de rigidification (220) est réalisé sous forme de deuxième segment de bague partiel (220) qui présente un rayon de courbure qui correspond à un rayon de courbure de la deuxième bague (120).

8. Éolienne (1) selon l'une quelconque des revendications 6 à 7, **caractérisée en ce que** le deuxième segment de rigidification (220) présente une pluralité d'ouvertures traversantes (221) qui sont à chaque fois en affleurement avec des deuxièmes alésages traversants (121) de la deuxième bague (120) et qui sont à chaque fois traversées par des deuxièmes boulons de connexion (150) .

9. Éolienne (1) selon l'une quelconque des revendications 6 à 8, **caractérisée en ce que** le deuxième segment de rigidification (220) est réalisé sous forme de deuxième segment de bague (220) .

10. Éolienne (1) selon la revendication 9, **caractérisée en ce que** le deuxième segment de bague (220) présente un nombre d'ouvertures traversantes (221) correspondant au nombre des deuxièmes alésages traversants (121) dans la deuxième bague (120), lesquelles ouvertures traversantes sont à chaque fois en affleurement avec des deuxièmes alésages traversants (121) de la deuxième bague (120) et sont à chaque fois traversées par des deuxièmes boulons de connexion (150) .

11. Éolienne (1) selon l'une quelconque des revendications précédentes, **caractérisée en ce que** la première bague (110) est réalisée sous forme de bague intérieure (110) et la deuxième bague (120) est réalisée sous forme de bague extérieure (120) du palier de pale (100).

12. Éolienne (1) selon l'une quelconque des revendications 1 à 10, **caractérisée en ce que** la première bague (110) est réalisée sous forme de bague extérieure (110) et la deuxième bague (120) est réalisée sous forme de bague intérieure (120) du palier de pale (100).
